# EUROPÄISCHE PATENTSCHRIFT

(11) **EP 1 013 951 B1**
(45) Veröffentlichungstag und Bekanntmachung des Hinweises auf die Patenterteilung: **17.07.2002**
(21) Anmeldenummer: 99125175.2
(22) Anmeldetag: 17.12.1999
(51) Int. Cl.: F16D 1/08, F16D 1/09, G01D 11/02

(54) **Taktscheibenträger**
Encoder disc hub
Disque-moyeu de codeur

(30) Priorität: 23.12.1998 DE 19860107
(43) Veröffentlichungstag der Anmeldung: 28.06.2000
(73) Patentinhaber: PWB-Ruhlatec Industrieprodukte GmbH, 99846 Seebach (DE)
(72) Erfinder: Braun, Paul-Wilhelm, 53842 Troisdorf (DE)
(74) Vertreter: Müller-Wolff, Thomas, Dipl.-Ing.

(56) Entgegenhaltungen:
- WO-A-95/14178
- DE-A- 19 641 929
- US-A- 3 829 184
- US-A- 4 306 838

## Beschreibung

Die Erfindung betrifft einen Taktscheibenträger mit einer Taktscheibenauflagefläche 1 und einer Nabe 2 für die Aufnahme einer Motorwelle, wie im Oberbegriff von Patentanspruch 1 angegeben.

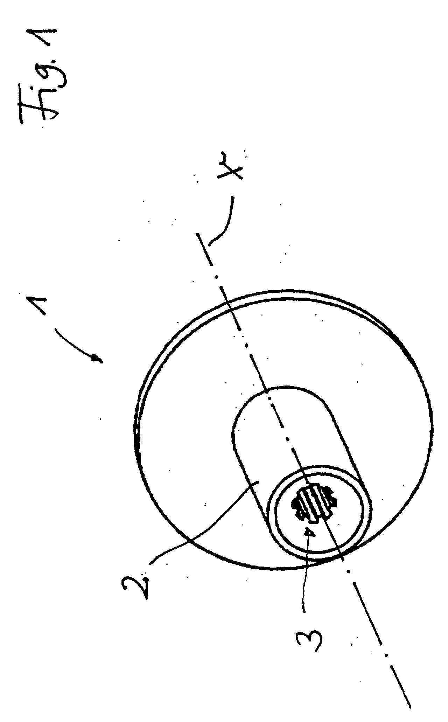

Aus der DE 196 41 929 A1 (RUHLATEC Industrieprodukte GmbH) ist ein Encoder mit teilbarem Gehäuse zum stirnseitigen Anflanschen an einen Motor bekannt. Aus Figur 1 der Offenlegungsschrift ist der Aufbau eines derartigen Encoders zu erkennen, wobei eine Taktscheibe 10 mit einer Nabe 9 auf das vordere Ende einer Motorwelle 2 aufgeschoben wird. Zur Fixierung der Taktscheibe 10 im vormontierten Zustand befindet sich ein Sicherungsring 14 im Gehäuse 11.

Dieser Sicherungsring 14 sorgt gleichzeitig für eine Vorzentrierung der Taktscheibennabe 9 in Richtung Motorwelle 2. Die eigentliche Zentrierung wird über eine sogenannte Fangbohrung vorgenommen, die in der Nabe 9 eingeformt ist. Sinn dieser Anordnung ist es, das Gehäuse 11 des Encoders mit allen erforderlichen Einbauteilen im vormontierten Zustand an dem Motor so zu befestigen, daß sich die Taktscheibe 10 auf der Motorwelle 2 ohne äußeren Eingriff und ohne Nachjustierung selbst zentriert.

Der beschriebene Encoder hat sich in der Praxis bereits bewährt. Er stellt eine gelungene Kombination zwischen hoher Fertigungsgenauigkeit bei günstigen Fertigungskosten dar.

Aufgrund seiner Vorteile und der voranschreitenden technischen Entwicklung werden die Encoder in zunehmendem Maße für die verschiedensten Anwendungsgebiete eingesetzt. Dabei steigen die Stückzahlen, so daß weitere Einsparungen an Material und eine vereinfachte Fertigung von erheblicher Bedeutung sind.

Aufgabe der vorliegenden Erfindung ist es daher, einen Taktscheibenträger der eingangs genannten Art derart weiterzubilden, daß sich der Aufwand an das Material und die Fertigungsgenauigkeit insbesondere von der Motorwelle weiter reduzieren lassen und gleichzeitig die Montage der Taktscheibe insbesondere bei einer selbsttätigen Zentrierung auf der Motorwelle vereinfacht wird.

Diese Aufgabe wird durch die im kennzeichnenden Teil von Patentanspruch 1 angegebenen Merkmale gelöst. Wenn die Innenwand der Nabe 2 geriffelt oder mit in Achsrichtung verlaufenden Stegen 3 versehen ist, kann die Nabe leichter auf die Motorwelle aufgeschoben werden. Die in der Bohrung der Nabe angeordneten Quetschstege verringern den Kraftaufwand und verhindern eine Deformation bzw. Schiefstellung der Taktscheibe, so daß jetzt die Positionierung des Taktscheibenträgers auf der Welle in einfacher Weise erfolgen kann.

Es ist besonders vorteilhaft, wenn die Taktscheibenauflage 1 scheibenförmig ausgebildet ist und die Nabe eine durchgehende Bohrung aufweist. Dadurch werden große Führungsflächen für die Postionierung der Taktscheibe bzw. der Justierung auf der Taktscheibenwelle bereitgestellt.

Wenn die Nabe 2 schaftförmig ausgebildet ist, müssen die Riffelungen oder Stege 3 in die Innenwand der durch den Schaft gehenden Bohrung eingeformt werden. Es ist vorteilhaft, wenn sich die Einformung der Riffelungen und Stege über eine Länge A der Nabe erstreckt, die ausreicht, um ein Schrägstellen der Taktscheibe auf der Motorwelle zu verhindern. Hierzu ist die Länge A mindestens doppelt so groß wie der Durchmesser der Motorwelle.

Als besonders zweckmäßige Querschnittsform für die Stege 3 haben sich trapezförmige Querschnitte erwiesen. Diese Querschnittsform läßt sich besonders günstig in einem metallischen Taktscheibenträger zur Geltung bringen. Die Nabe des Taktscheibenträgers kann vorzugsweise aus Federstahl bestehen, die Taktscheibenauflagenfläche vorzugsweise aus Aluminium.

Wenn die Bohrung der Nabe 2 zur Motorseite hin trichterförmig erweitert ist, kann die Welle leichter in die Bohrung eingeführt werden. In diesem Fall ist es zweckmäßig, die trichterförmige Erweiterung 4 der Nabe 2 über einen Bereich B bis an die Riffelungen oder Stege 3 heranreichen zu lassen. Hierdurch wird gewährleistet, daß der Quetschdruck auf die Motorwelle gleichmäßig ansteigt und ein Verzug der ineinanderzusteckenden Teile vermieden wird.

Im folgenden wird die Erfindung anhand eines Ausführungsbeispieles näher erläutert.

Es zeigen:
- Figur 1: perspektivische Ansicht eines erfindungsgemäßen Taktscheibenträgers,
- Figur 2: Frontalansicht eines erfindungsgemäßen Taktscheibenträgers,
- Figur 3: Längsquerschnitt durch einen erfindungsgemäßen Taktscheibenträger.

In Figur 1 sind die Taktscheibenauflagefläche 1, eine Nabe 2 und die in Achsrichtung verlaufenden Stege 3 zu erkennen. Die Taktscheibenauflage 1 ist scheibenförmig ausgebildet und weist eine durchgehende Bohrung auf, die in Achsrichtung X verläuft.

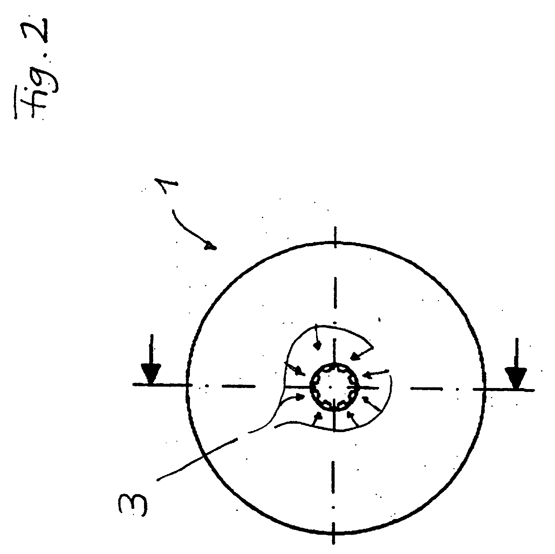

Aus der in Figur 2 erkennbaren Frontseite der Taktscheibenauflage 1 ist die Anordnung der in Achsrichtung verlaufenden Stege 3 zu ersehen. Die Stege 3 haben einen trapezförmigen Querschnitt, so daß beim Einschieben der Motorwelle die schmale Trapezseite mit der Motorwelle verquetscht wird.

Wenn die Nabe, bzw. die Quetschstäbe aus Federstahl oder einem weichen Material wie Aluminium oder Kunststoff bestehen, werden die Quetschkräfte überwiegend in der Nabe aufgenommen. Die Motorwelle ist gehärtet und normalerweise fein bearbeitet. Durch das Quetschen kann aber die Nabe leichter aufgeschoben werden, so daß der Kraftaufwand insgesamt geringer wird. Dadurch wird die Gefahr einer Deformation, bzw. Schiefstellung der Taktscheibe auf der Motorwelle verringert.

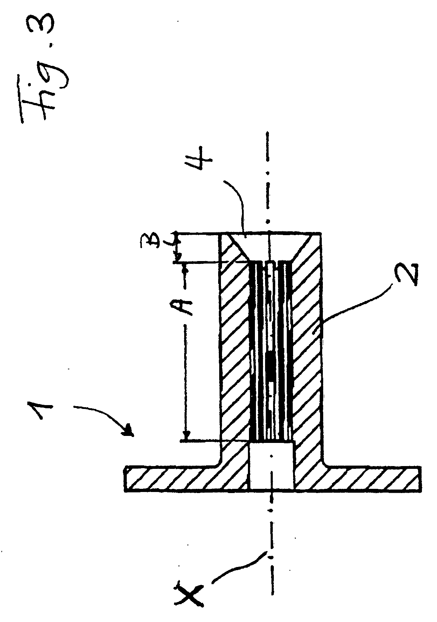

In Figur 3 ist der Verlauf der Stege in Achslängsrichtung erkennbar. Die Länge der Stege ist hier mit A angegeben. Diese Länge ist so bemessen, daß eine ausreichende Führung und eine Zentrierung auf der Motorwelle möglich ist.

Von der Motorseite her gesehen, besitzt die Nabe 2 eine trichterförmige Erweiterung 4, die über eine Länge B reicht. An der engsten Stelle geht der Trichter in die hier vorzugsweise abgeflachten Stege über (Schnittstelle der Länge A, B). Diese Stelle ist besonders wichtig, da hier die Quetschung eingeleitet wird und durch den weichen Übergang eine Rißbildung vermieden wird.

Die Anzahl der Quetschstege beträgt vorzugsweise 2+N, wobei N von 0 bis unendlich reicht. Bei Verwendung von Schlitzen oder Riffelungen gilt die Formel in entsprechender Weise mit der Maßgabe, daß auch hier für einen weichen Übergang von der engsten Stelle der trichterförmigen Erweiterung 4 zu den Riffelungen gesorgt wird.

In zahlreichen Versuchen wurde festgestellt, daß bei Verwendung des erfindungsgemäßen Taktscheibenträgers die Bearbeitung der Motorwelle um eine Qualitätsstufe verringert werden kann. Außerdem ist eine Härtung der Oberfläche nicht mehr erforderlich, so daß die Fertigungskosten erheblich reduziert werden können. Eine mechanische Befestigung der Nabe auf der Welle kann ebenfalls entfallen. Bisher wurde nämlich eine Sicherung der Nabe durch seitliche Verschraubung mit der Motorwelle, z. B. in Form einer Klemmschraube für notwendig erachtet. Die hierzu erforderlichen Vorarbeiten (Bohren, Nachbearbeiten, Feinbearbeiten) sowie die Verwendung von zusätzlichem Werkzeug erübrigt sich, wenn die Taktscheibe gemäß der vorliegenden Erfindung ausgebildet ist.

## Patentansprüche

1. Taktscheibenträger mit einer Taktscheibenauflagefläche (1) und einer Nabe (2) für die Aufnahme einer Motorwelle, wobei die Taktscheibenauflagefläche (1) scheibenförmig ausgebildet ist und die Nabe eine durchgehende Bohrung aufweist,
**dadurch gekennzeichnet,**
**dass** die Innenwand der Nabe (2) geriffelt oder mit in Achsrichtung verlaufenden Stegen (3) versehen ist, wobei die Nabe aus einem federnden oder einem im Vergleich zur Motorwelle weichen Material besteht und die Riffelungen und Stege über eine Länge (A) der Nabe verlaufen, die mindestens doppelt so groß ist wie der Durchmesser der Motorwelle.

2. Taktscheibenträger nach einem der vorhergehenden Ansprüche,
**dadurch gekennzeichnet,**
**dass** die Stege (3) als Quetschstege ausgebildet sind.

3. Taktscheibenträger nach einem der vorhergehenden Ansprüche,
**dadurch gekennzeichnet,**
**dass** die Stege (3) im Querschnitt gesehen trapezförmig ausgebildet sind.

4. Taktscheibenträger nach einem der vorhergehenden Ansprüche,
**dadurch gekennzeichnet,**
**dass** der Taktscheibenträger zumindest teilweise aus einem federnden oder weichen Metall wie Federstahl oder Aluminium oder aus Kunstoff besteht.

5. Taktscheibenträger nach einem der vorhergehenden Ansprüche,
**dadurch gekennzeichnet,**
**dass** die Bohrung der Nabe (2) zur Motorseite hin trichterfömig erweitert ist.

6. Taktscheibenträger nach einem der vorhergehenden Ansprüche,
**dadurch gekennzeichnet,**
**dass** die trichterförmige Erweiterung (4) der Nabe (2) über einen Bereich (B) bis an die Riffelungen oder Stege (3) heranreichen und in diese übergeht.

## Claims

1. A clock disc carrier with a clock disc supporting face (1) and a hub (2) for receiving an engine shaft, wherein the clock disc supporting face (1) is disc-shaped and wherein the hub comprises a through-bore,
**characterised in**
**that** the inner wall of the hub (2) is grooved or provided with axially extending webs (3), wherein the hub consists of a resilient material or of a material which is soft as compared to the material of the engine shaft and wherein the grooves and webs extend along a length (A) of the hub, which length (A) is at least twice as great as the diameter of the engine shaft.

2. A clock disc carrier according to any one of the preceding claims,
**characterised in**
**that** the webs (3) are provided in the form of squeezed webs.

3. A clock disc carrier according to any one of the preceding claims,
**characterised in**
**that**, if viewed in a cross-section, the webs (3) are trapezoidal in shape.

4. A clock disc carrier according to any one of the preceding claims,
**characterised in**
**that** the clock disc carrier consists at least partially of a resilient or soft material such a spring steel or aluminium or of plastics.

5. A clock disc carrier according to any one of the preceding claims,
**characterised in**
**that**, towards the engine end, the bore of the hub (2) widens funnel-like.

6. A clock disc carrier according to any one of the preceding claims,
**characterised in**
**that** the funnel-like widening (4) of the hub (2) extends over a region (B) as far as the grooves or webs (3) and changes into same.

## Revendications

1. Support de disque de synchronisation comportant une surface d'appui (1) pour le disque de synchronisation et un moyeu (2) pour recevoir un arbre moteur, la surface d'appui (1) pour le disque de synchronisation étant réalisée en forme de disque et le moyeu présentant un perçage traversant, **caractérisé en ce que** la paroi intérieure du moyeu (2) est cannelée ou pourvue de barrettes (3) s'étendant en direction axiale, le moyeu étant constitué en un matériau élastique ou souple par comparaison à celui de l'arbre moteur, et les cannelures et les barrettes s'étendant sur une longueur (A) du moyeu qui est au moins le double du diamètre de l'arbre moteur.

2. Support de disque de synchronisation selon la revendication précédente, **caractérisé en ce que** les barrettes (3) sont réalisées sous forme de barrettes d'écrasement.

3. Support de disque de synchronisation selon l'une des revendications précédentes, **caractérisé en ce que** les barrettes (3) sont réalisées en forme trapézoïdale, vues en section transversale.

4. Support de disque de synchronisation selon l'une des revendications précédentes, **caractérisé en ce que** le support de disque de synchronisation est constitué du moins partiellement d'un métal élastique ou souple, tel que de l'acier ressort ou de l'aluminium, ou de matière plastique.

5. Support de disque de synchronisation selon l'une des revendications précédentes, **caractérisé en ce que** le perçage du moyeu (2) est élargi en forme d'entonnoir vers le côté moteur.

6. Support de disque de synchronisation selon l'une des revendications précédentes, **caractérisé en ce que** l'élargissement en forme d'entonnoir (4) du moyeu (2) s'étend sur une région (B) jusqu'aux cannelures ou barrettes (3) et se transforme en celles-ci.
